# DEMANDE DE BREVET EUROPEEN

(11) **EP 4 708 595 A1**
(43) Date de publication de la demande: **11.03.2026**
(21) Numéro de dépôt: 24306473.0
(22) Date de dépôt: 10.09.2024
(51) Int. Cl.: H02G 1/14, H02G 15/18

(54) **OUTIL D'INSTALLATION D'UNE JONCTION DE CÂBLE ÉLECTRIQUE ET PROCÉDÉ D'INSTALLATION ASSOCIÉ**

(71) Demandeur: Nexans, 92400 Courbevoie (FR)
(72) Inventeur: CARPENTIER, Ludovic, 92400 Courbevoie (FR); LOUIS, Valentin, 92400 Courbevoie (FR); DEBIEVRE, Pascal, 92400 Courbevoie (FR); LEFEBVRE, Jérémy, 92400 Courbevoie (FR); ASTIER, Maxence, 92400 Courbevoie (FR)
(74) Mandataire: Cabinet Boettcher

(57) **Abrégé**

Cet outil (10) d'installation d'une jonction de câble électrique placée sur au moins un tube support comporte : une partie centrale (12) de préhension ; deux branches (14) en L s'étendant chacune à partir d'une extrémité de la partie centrale (12) de préhension perpendiculairement à la partie centrale (12) de préhension, les deux branches (14) étant symétriques par rapport à un plan perpendiculaire à la partie centrale (12) de préhension ; la base du L de chaque branche (14), parallèle à la partie centrale (12) de préhension, présentant une ouverture (16) adaptée au clipsage sur un ergot situé sur le tube support.

## Description

La présente invention se rapporte à un outil d'installation d'une jonction de câble électrique et à un procédé d'installation associé.

Elle sera décrite ici dans son application à l'installation d'une jonction rétractable à froid. Néanmoins, elle peut s'appliquer à l'installation de toute jonction impliquant l'utilisation d'un tube support, à retirer en fin d'installation.

Une jonction de câble électrique rétractable à froid est généralement constituée d'un matériau expansé à base d'EPDM (éthylène-propylène-diène monomère) ou de silicone. Ce matériau est placé sur un tube support pour les besoins de son installation. Le tube support peut comporter en pratique un ou plusieurs tubes ou paires de demi-tubes.

Pour pouvoir extraire le tube support de façon à le séparer du matériau de la jonction, un outil permettant de tirer le tube support est nécessaire.

Diverses contraintes doivent être prises en compte pour offrir une solution satisfaisante. L'outil doit être ergonomique et son utilisation doit être très simple à comprendre par l'opérateur. En outre, l'impact environnemental de l'outil doit être le plus faible possible. Par ailleurs, le coût de fabrication de l'outil doit être compétitif.

La présente invention vise à satisfaire ces contraintes.

Dans ce but, la présente invention propose un outil d'installation d'une jonction de câble électrique placée sur au moins un tube support, remarquable en ce qu'il comporte :
une partie centrale de préhension ;
deux branches en L s'étendant chacune à partir d'une extrémité de la partie centrale de préhension perpendiculairement à la partie centrale de préhension, les deux branches étant symétriques par rapport à un plan perpendiculaire à la partie centrale de préhension ;
la base du L de chaque branche, parallèle à la partie centrale de préhension, présentant une ouverture adaptée au clipsage sur un ergot situé sur le tube support.

Ainsi, grâce à sa forme de levier à poignée, clipsable sur le tube support, l'outil conforme à la présente invention est ergonomique et permet de réaliser l'opération d'extraction du tube support par une simple manoeuvre de « clipser et tirer ». En outre, l'outil ne nécessite aucune pièce additionnelle, ce qui minimise son coût de fabrication.

Dans un mode particulier de réalisation, le bord des ouvertures présente au moins un godron.

Cela permet de réduire le diamètre de passage des ergots et ainsi d'améliorer le clipsage de l'outil sur le tube support.

Dans un mode particulier de réalisation, l'outil est réalisé en une pièce moulée unique.

Cela permet d'éviter la fabrication d'un moule complexe.

Dans un mode particulier de réalisation, l'outil est réalisé en matière plastique recyclée et/ou recyclable.

Cela permet de limiter son impact environnemental.

Dans un mode particulier de réalisation, l'outil comporte en outre une traverse de renforcement parallèle à la partie centrale de préhension reliant les deux branches.

Cela permet d'augmenter la robustesse de l'outil.

Dans le même but que celui indiqué plus haut, la présente invention propose également un procédé d'installation d'une jonction de câble électrique placée sur au moins un tube support, au moyen d'un outil tel que succinctement décrit ci-dessus, remarquable en ce qu'il comporte des étapes consistant à :
clipser l'outil sur le tube support en positionnant les ouvertures de l'outil en regard des ergots du tube support ;
soulever l'outil par l'intermédiaire de la partie centrale de préhension, de façon à placer l'outil en position de tirage du tube support ;
tirer sur la partie centrale de préhension dans la direction axiale du tube support, de façon à extraire la totalité du tube support.

Les avantages du procédé d'installation étant les mêmes que ceux de l'outil, ils ne sont pas répétés ici.

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
La figure 1 contient deux représentations schématiques en perspective montrant respectivement l'avant et l'arrière d'un outil conforme à la présente invention, ainsi qu'un détail de réalisation en vue agrandie, dans un mode particulier de réalisation.
Les figures 2 à 6 sont des représentations schématiques des principales étapes d'un procédé d'installation d'une jonction de câble électrique mettant en oeuvre un tube support et un outil conforme à la présente invention clipsé sur le tube support, dans un mode particulier de réalisation.

L'outil conforme à la présente invention est un outil d'installation d'une jonction de raccordement de câble électrique dans le cas où cette jonction est placée sur au moins un tube support. A titre d'exemple nullement limitatif, la jonction peut être une jonction de câble électrique à moyenne tension.

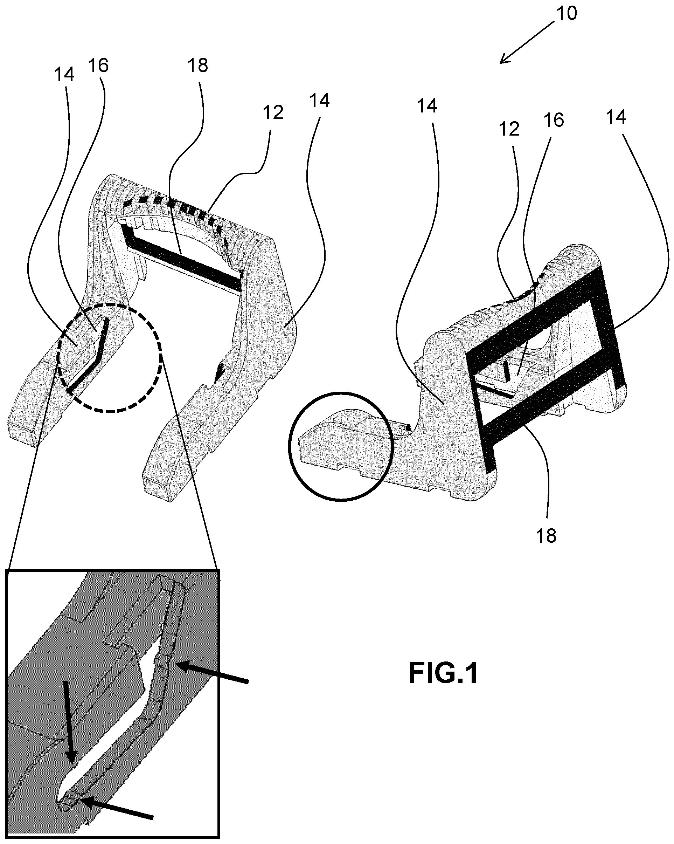

Comme le montre la figure 1, un outil 10 conforme à la présente invention comporte une partie centrale 12 de préhension. La partie centrale 12 de préhension a une fonction de poignée : c'est la partie de l'outil 10 par laquelle l'opérateur va le saisir. Afin d'améliorer l'ergonomie et le confort d'utilisation, comme représenté dans le mode de réalisation de la figure 1, la partie centrale 12 de préhension peut présenter un côté concave destiné à accueillir les doigts de l'opérateur et/ou être dotée de créneaux apportant un effet antidérapant.

L'outil 10 comporte en outre deux branches 14 présentant une forme générale en L. Chacune des deux branches 14 s'étend à partir d'une extrémité de la partie centrale 12 de préhension et perpendiculairement à cette dernière.

Les deux branches 14 sont symétriques par rapport à un plan perpendiculaire à la partie centrale 12 de préhension.

De façon optionnelle, l'outil 10 peut en outre comporter au moins une traverse 18 de renforcement parallèle à la partie centrale 12 de préhension et reliant les deux branches 14, soit au niveau de la base du L, soit au niveau du montant du L, cette seconde possibilité étant illustrée sur la figure 1. La traverse 18 de renforcement a pour seconde fonction de protéger les doigts de l'utilisateur contre un éventuel écrasement contre le câble sur lequel est installée la jonction.

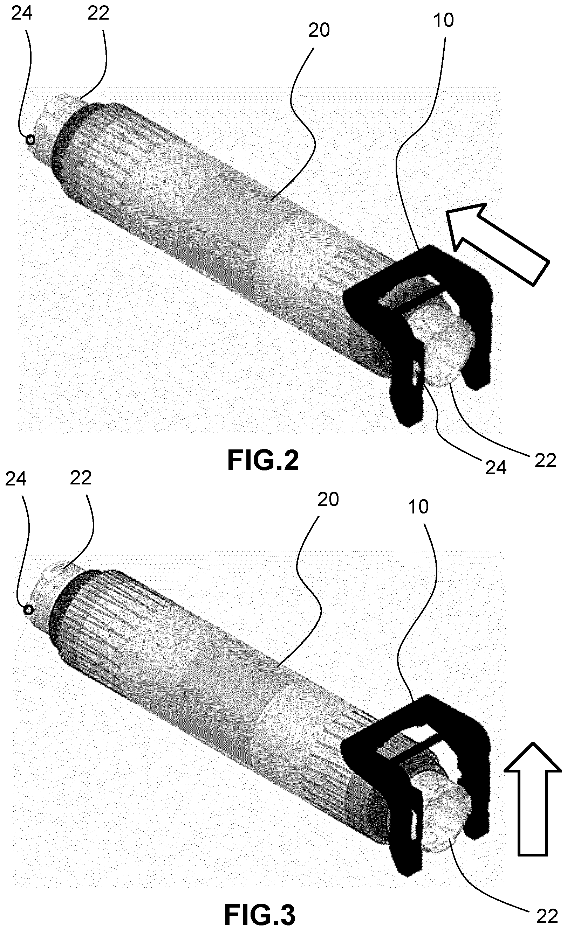

Conformément à la présente invention, la base du L de chaque branche 14, qui est parallèle à la partie centrale 12 de préhension, présente une ouverture 16 adaptée au clipsage sur un ergot 24 situé sur le tube support 22 (représenté sur les figures 2 à 6 décrites ci-après).

Les ouvertures 16 ont avantageusement une forme en V, une première branche du V étant parallèle à la base du L des branches 14 de l'outil 10 et la seconde branche du V formant un angle supérieur à 90°, de préférence supérieur à 120°, avec la première branche du V, la seconde branche du V pouvant en outre présenter une forme évasée. Cette forme d'ouverture 16 est conçue pour optimiser la mobilité de l'outil 10 par rapport au tube support 22 lors des opérations d'extraction du tube support 22.

Les ouvertures 16 peuvent par exemple se situer à égale distance des deux extrémités de la base du L de chaque branche 14. Les dimensions respectives des ouvertures 16 et des ergots 24 sont choisies de façon à permettre le clipsage et à ajuster l'effort de clipsage. En outre, afin d'améliorer le clipsage, comme le montrent les flèches sur la vue agrandie du bas de la figure 1, le bord des ouvertures 16 présente un ou plusieurs godrons placés de façon à réduire localement le diamètre de passage des ergots 24.

L'outil 10 peut être réalisé d'un seul tenant, par moulage, c'est-à-dire être constitué d'une pièce moulée unique.

Il peut être réalisé en matière plastique recyclée et/ou recyclable.

On peut prévoir des outils 10 de différentes tailles, en fonction des dimensions des jonctions de câble ciblées et donc en fonction du diamètre des tubes support 22 concernés.

Les principales étapes du procédé, conforme à la présente invention, d'installation d'une jonction de câble électrique placée sur un tube support au moyen de l'outil 10 décrit précédemment sont maintenant décrites en référence aux figures 2 à 6.

La figure 2 illustre une première étape qui consiste à clipser l'outil 10 sur le tube support 22. Ce clipsage s'effectue en rapprochant l'outil 10 du tube 22, dans la direction indiquée par la flèche sur le dessin, de façon à positionner les ouvertures 16 de l'outil 10 en regard des ergots 24 du tube support 22. Le bruit de « clic » accompagnant le clipsage, qui est dû aux dimensions respectives des ouvertures 16 et des ergots 24 et à la présence du ou des godrons susmentionnés sur les bords des ouvertures 16, indique à l'opérateur que le clipsage a bien eu lieu.

Dans le mode particulier de réalisation des figures 2 à 6, la jonction 20 est placée sur deux tubes support 22, disposés dans le prolongement l'un de l'autre. Pour plus de lisibilité du dessin, l'ergot désigné par la référence 24 est celui qui est situé sur l'un des deux tubes 22, tandis que l'outil 10 est clipsé sur les ergots de l'autre tube 22.

La figure 3 illustre une étape suivante du procédé, qui consiste à soulever l'outil 10, par l'intermédiaire de la partie centrale 12 de préhension, dans la direction indiquée par la flèche sur le dessin, de façon à placer l'outil 10 en position de tirage du tube support 22. Ce mouvement de levage de l'outil 10 s'accompagne également d'un bruit de « clic », qui est dû aux dimensions respectives des ouvertures 16 et des ergots 24 et à la présence du ou des godrons susmentionnés sur les bords des ouvertures 16 et qui indique à l'opérateur que l'outil 10 est dans une position correcte.

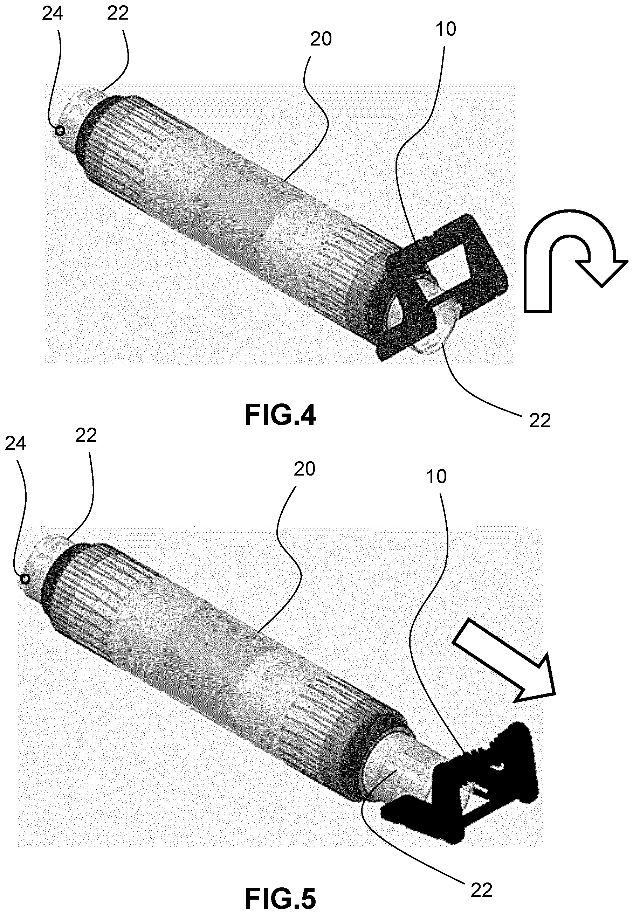

La figure 4 illustre une étape suivante qui consiste à abaisser la partie centrale 12 de préhension, dans la direction indiquée par la flèche sur le dessin, pour pouvoir prendre appui sur le corps de la jonction 20 et créer un phénomène de bras de levier glissant (au niveau de la partie des branches 14 encerclée en traits continus sur la vue de droite de la figure 1), puis tirer sur la partie centrale 12 de préhension dans la direction axiale du tube support 22, de façon à commencer l'extraction du tube support 22 hors de la jonction 20.

La figure 5 illustre une étape suivante qui consiste à tirer sur la partie centrale 12 de préhension dans la direction axiale du tube support 22, indiquée par une flèche sur le dessin. Dans l'état illustré sur la figure 5, une partie du tube support 22 est déjà extraite de la jonction 20.

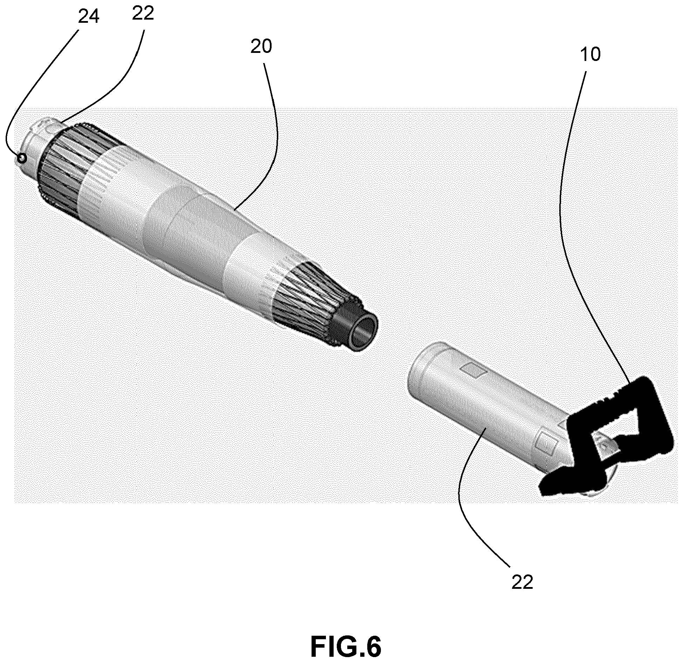

La figure 6 illustre l'état obtenu à la fin de l'opération de tirage sur la partie centrale 12 de préhension : la totalité du tube support 22 est extraite de la jonction 20. On observe que la partie de la jonction 20 ainsi libérée s'est rétractée.

Etant donné que dans le mode particulier de réalisation illustré, la jonction 20 est initialement placée sur deux tubes support 22, on répète ensuite sur l'autre tube support 22 les étapes du procédé qui vient d'être décrit, de façon à libérer la partie restante de la jonction 20 et à lui permettre de se rétracter également.

De par sa forme globale, l'outil 10 conforme à l'invention présente l'avantage supplémentaire de pouvoir servir de moyen de protection de la jonction 20 pendant le stockage sous emballage et le transport de celle-ci, tout en étant compatible avec l'utilisation de bandes de serrage, du type feuillards plastique de cerclage, suivant la direction axiale de la jonction, pour bloquer l'ensemble formé par la jonction et son ou ses tubes support durant leur transport.

## Revendications

1. Outil (10) d'installation d'une jonction (20) de câble électrique placée sur au moins un tube support (22), **caractérisé en ce qu'**il comporte :
une partie centrale (12) de préhension ;
deux branches (14) en L s'étendant chacune à partir d'une extrémité de ladite partie centrale (12) de préhension perpendiculairement à ladite partie centrale (12) de préhension, lesdites deux branches (14) étant symétriques par rapport à un plan perpendiculaire à ladite partie centrale (12) de préhension ;
la base du L de chaque branche (14), parallèle à ladite partie centrale (12) de préhension, présentant une ouverture (16) adaptée au clipsage sur un ergot (24) situé sur ledit tube support (22).

2. Outil (10) selon la revendication 1, **caractérisé en ce que** le bord des ouvertures (16) présente au moins un godron.

3. Outil (10) selon la revendication 1 ou 2, **caractérisé en ce qu'**il est réalisé en une pièce moulée unique.

4. Outil (10) selon la revendication 1, 2 ou 3, **caractérisé en ce qu'**il est réalisé en matière plastique recyclée et/ou recyclable.

5. Outil (10) selon l'une quelconque des revendications précédentes, **caractérisé en ce qu'**il comporte en outre une traverse (18) de renforcement parallèle à ladite partie centrale (12) de préhension reliant les deux branches (14).

6. Procédé d'installation d'une jonction (20) de câble électrique placée sur au moins un tube support (22), au moyen d'un outil (10) selon l'une quelconque des revendications précédentes, **caractérisé en ce qu'**il comporte des étapes consistant à :
clipser ledit outil (10) sur ledit tube support (22) en positionnant les ouvertures (16) de l'outil (10) en regard des ergots (24) du tube support (22) ;
soulever l'outil (10) par l'intermédiaire de la partie centrale (12) de préhension, de façon à placer l'outil (10) en position de tirage du tube support (22) ;
tirer sur la partie centrale (12) de préhension dans la direction axiale du tube support (22), de façon à extraire la totalité du tube support (22).
